# EUROPEAN PATENT APPLICATION

(11) **EP 4 851 508 A1**
(43) Date of publication of application: **09.12.2026**
(21) Application number: 26182987.3
(22) Date of filing: 03.06.2026
(51) Int. Cl.: F16K 17/36, B64D 37/32, F01D 21/04, F02C 7/22, F02C 7/25, F02C 7/232, F16K 31/08

(54) **INERTIA VALVE SAFETY SYSTEM**

(30) Priority: 04.06.2025 US 202519227773
(71) Applicant: RTX Corporation, Farmington, CT 06032 (US)
(72) Inventor: STEHLIK, Eric, West Hartford, 06110 (US); YOWN, Bryan, Hartford, 06103 (US)
(74) Representative: Dehns

(57) **Abstract**

An inertial valve (202) comprising a housing (208) configured to connect with an engine component (106). The housing (208) defining an inlet for receiving a flammable liquid and an outlet for outputting the flammable liquid. The inertial valve (202) is configured to provide a first mode of operation to provide a flow of flammable liquid from the inlet to the outlet and a second mode of operation to limit the flow (210) of the flammable liquid received at the inlet to the outlet. The inertial valve (202) is configured to move from the first mode of operation to the second mode of operation responsive to a g force on the inertial valve exceeding a predetermined level.

## Description

### TECHNICAL FIELD

This disclosure relates generally to a controlling flammable liquid flow from broken components within an aircraft engine. More specifically, this disclosure relates to an inertial valve for cutting off flow to broken components within an aircraft engine.

### BACKGROUND

Within an aircraft turbine engine, a blade out event wherein a fan or turbine blade breaks generates a large amount of energy (60 to 120 g's in operational commercial engines (OCE)) that must be dissipated throughout the engine. This amount of force passing through the engine can cause components to move, clash and ultimately break. If one of the broken components is fuel or oil carrying, the fuel or oil can leak from the broken component in an uncontrolled exothermic event can occur that comprises the integrity of the aircraft. Given that the pilot has a five minute window to assess the situation, follow a checklist and execute commands, a large amount of flammable liquid can pool and ultimately be ignited to cause the exothermic event. Therefore, some manner for limiting the continued leakage of flammable liquid from broken components to prevent exothermic events would be useful.

### SUMMARY

This disclosure relates to inertial valves.

In some examples, an inertial valve includes a housing configured to connect with an engine component, the housing defining an inlet for receiving a flammable liquid and an outlet for outputting the flammable liquid, where the inertial valve is configured to provide a first mode of operation to provide a flow of flammable liquid from the inlet to the outlet, where the inertial valve is configured to provide a second mode of operation to limit the flow of the flammable liquid received at the inlet to the outlet, and where the inertial valve is configured to move from the first mode of operation to the second mode of operation responsive to a g force on the inertial valve exceeding a predetermined level.

Any single one or any combination of the following features may be used with the examples above. The inertial valve may include a ball valve, a plurality of flexible nubs to maintain the ball valve in a first position in the first mode of operation to provide the flow of the flammable liquid from the inlet to the outlet, and where responsive to the g force exceeding the predetermined level the ball valve is configured to push past the plurality of flexible nubs to a second position in the second mode of operation to limit the flow of the flammable liquid from the inlet to the outlet. Responsive to the g force exceeding the predetermined level the ball valve is configured to push past the plurality of springs to a second position in the second mode of operation to limit the flow of the flammable liquid from the inlet to the outlet. The ball is configured to limit the flow of the flammable liquid from the inlet to the outlet when the member moves to a second position in the second mode of operation responsive to the g force exceeding the predetermined level, a first spring located on a top side of the ball, a second spring located on a bottom side of the ball, and where the first spring and the second spring bias the member to the first position and move the member to the second position responsive to g force exceeding the predetermined level. The ball is configured to limit the flow of the flammable liquid from the inlet to the outlet when the member moves to a second position in the second mode of operation responsive to the g force exceeding the predetermined level, a spring connected to a first end of the member for biasing the member to the second position, a securing mechanism configure to secure the member into the first position when the inertial valve is in the first mode of operation, and where the securing mechanism is configured to release the member to move to the second position in the second mode of operation responsive to the g force exceeding the predetermined level. The electromechanical valve is located in a first position to provide the flow of the flammable liquid through the passageway in the first mode of operation and located in a second position to limit the flow of the flammable liquid through the passageway in the second mode of operation responsive to the control signal indicating the g force has exceeded the predetermined level. The expansion sleeve is deflated in the first mode of operation to provide the flow of the flammable liquid from the inlet to the outlet and the expansion sleeve is inflated in the second mode of operation to limit the flow of the flammable liquid from the inlet to the outlet, an inflator configured to inflate the expansion sleeve responsive to a trigger input, and an actuator configured to detect the g force exceeding the predetermined level and generate the trigger input responsive thereto. The bypass valve is placed in the first position to provide the flow of the flammable liquid through the bypass passage while the inertial valve is in the second mode of operation responsive to an external control signal.

In other examples, a system for controlling leakage of flammable liquids includes an engine component having a flammable liquid pass therethrough, at least one inertial valve connected to the engine component to allow the flammable liquid to pass therethrough, the at least one inertial valve may include a housing configured to connect with the engine component, the housing defining an inlet for receiving the flammable liquid and an outlet for outputting the flammable liquid, where the inertial valve is configured to provide a first mode of operation to provide a flow of flammable liquid from the inlet to the outlet, where the inertial valve is configured to provide a second mode of operation to limit the flow of the flammable liquid received at the inlet to the outlet, and where the inertial valve is configured to move from the first mode of operation to the second mode of operation responsive to a g force on the inertial valve exceeding a predetermined level.

Any single one or any combination of the following features may be used with the examples above. The system where the at least one inertial valve further may include a ball valve, a plurality of flexible nubs to maintain the ball valve in a first position in the first mode of operation to provide the flow of the flammable liquid from the inlet to the outlet, and where responsive to the g force exceeding the predetermined level the ball valve is configured to push past the plurality of flexible nubs to a second position in the second mode of operation to limit the flow of the flammable liquid from the inlet to the outlet. The at least one inertial valve further may include a ball valve, a plurality of springs to maintain the ball valve in a first position in the first mode of operation to provide the flow of the flammable liquid from the inlet to the outlet, and where responsive to the g force exceeding the predetermined level the ball valve is configured to push past the plurality of springs to a second position in the second mode of operation to limit the flow of the flammable liquid from the inlet to the outlet. The at least one inertial valve further may include a member defining an opening therein on a first portion of the member to provide the flow of the flammable liquid from the inlet through the opening to the outlet when the member is in a first position, a ball connecting to a second portion of the member, where the ball is configured to limit the flow of the flammable liquid from the inlet to the outlet when the member moves to a second position in the second mode of operation responsive to the g force exceeding the predetermined level, a first spring located on a top side of the ball, a second spring located on a bottom side of the ball, and where the first spring and the second spring bias the member to the first position and move the member to the second position responsive to g force exceeding the predetermined level. The at least one inertial valve further may include a member defining an opening therein on a first portion of the member to provide the flow of the flammable liquid from the inlet through the opening to the outlet when the member is in a first position, a ball connecting to a second portion of the member, where the ball is configured to limit the flow of the flammable liquid from the inlet to the outlet when the member moves to a second position in the second mode of operation responsive to the g force exceeding the predetermined level, a spring connected to a first end of the member for biasing the member to the second position, a securing mechanism configure to secure the member into the first position when the inertial valve is in the first mode of operation, and where the securing mechanism is configured to release the member to move to the second position in the second mode of operation responsive to the g force exceeding the predetermined level. The at least one inertial valve further may include an accelerometer configured to detect the g force exceeding the predetermined level and generating a sense signal responsive thereto, a controller configured to generate control signals responsive to the sense signal from the accelerometer, and an electromechanical valve located in a passageway between the inlet and the outlet, where the electromechanical valve is located in a first position to provide the flow of the flammable liquid through the passageway in the first mode of operation and located in a second position to limit the flow of the flammable liquid through the passageway in the second mode of operation responsive to the control signal indicating the g force has exceeded the predetermined level. The at least one inertial valve further may include an expansion sleeve located between the inlet and the outlet, where the expansion sleeve is deflated in the first mode of operation to provide the flow of the flammable liquid from the inlet to the outlet and the expansion sleeve is inflated in the second mode of operation to limit the flow of the flammable liquid from the inlet to the outlet, an inflator configured to inflate the expansion sleeve responsive to a trigger input, and an actuator configured to detect the g force exceeding the predetermined level and generate the trigger input responsive thereto. The at least one inertial valve further may include a bypass passage interconnecting the inlet to the outlet, a bypass valve located within the bypass passage configured to have a first position to provide the flow of the flammable liquid there through and a second position to limit the flow of the flammable liquid therethrough, and where the bypass valve is placed in the first position to provide the flow of the flammable liquid through the bypass passage while the inertial valve is in the second mode of operation responsive to an external control signal. The at least one inertial valve further may include a plurality of inertial valves, each of the plurality of inertial valves having an orientation axis associated therewith, where an inertial value is actuated to the second mode of operation responsive to the g force exceeding the predetermined level in a direction substantially a same as the orientation axis of the inertial valve.

In still other examples, a method for controlling a flow of flammable liquid includes connecting an inertial valve with an engine component, the inertial valve defining an inlet for receiving a flammable liquid and an outlet for outputting the flammable liquid, providing a first mode of operation for the inertial valve to provide the flow of the flammable liquid from the inlet to the outlet, where the inertial valve is configured to providing a second mode of operation for the inertial valve to limit the flow of the flammable liquid received at the inlet to the outlet, and moving the inertial valve from the first mode of operation to the second mode of operation responsive to a g force on the inertial valve exceeding a predetermined level.

Any single one or any combination of the following features may be used with the examples above. The method may include locating a plurality of inertial valves on the engine component, each of the plurality of inertial valves having an orientation axis associated therewith and actuating the inertial valve of the plurality of inertial valves to the second mode of operation responsive to the g force exceeding the predetermined level in a direction substantially a same as the orientation axis of the inertial valve. The method may include interconnecting a bypass passage between the inlet to the outlet, locating a bypass valve within the bypass passage configured to have a first position to provide the flow of the flammable liquid there through and a second position to limit the flow of the flammable liquid therethrough, and placing the bypass valve in the first position to provide the flow of the flammable liquid through the bypass passage while the inertial valve is in the second mode of operation responsive to an external control signal.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates an interconnection between a flammable liquid supply and an engine;
FIGURES 2A and 2B illustrate an inertial valve in open and closed positions;
FIGURES 3A and 3B illustrate an example of an inertial valve in open and closed positions;
FIGURES 4A and 4B illustrate another example of an inertial valve in open and closed positions;
FIGURES 5A and 5B illustrate another example of an inertial valve in open and closed positions;
FIGURES 6A and 6B illustrate another example of an inertial valve in open and closed positions;
FIGURES 7A and 7B illustrate another example of an inertial valve in open and closed positions;
FIGURES 8A and 8B illustrate another example of an inertial valve in open and closed positions;
FIGURES 9A and 9B illustrate another example of an inertial valve in open and closed positions;
FIGURES 10A and 10B illustrate another example of an inertial valve in open and closed positions;
FIGURES 11A and 11B illustrate another example of an inertial valve in open and closed positions; and
FIGURE 12 illustrates the manner for orienting inertial valves in various directions to account for differing G forces.

### DETAILED DESCRIPTION

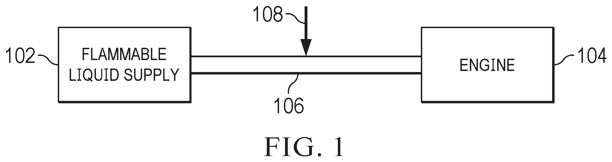

FIGURES 1 through 12, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates an interconnection between a flammable liquid supply 102 and an engine 104 through some type of engine component 106. The engine component 106 may comprise a feed line, bracket or any other engine component through which flammable liquid may pass when proceeding to the engine 104 from a flammable liquid supply 102. Additionally, the flammable liquid supply 102 need not only be some type of reservoir but may be another engine component that provides flammable liquids to another part of the engine 104. During blade outer events within the engine 104 excessive G forces can cause breakage of engine components 106. When a particular engine component 106 breaks the flammable liquid within the engine component may pool at a location within the engine 104. The pool flammable liquid may be ignited by heat or sparks within the engine causing an uncontrolled exothermic event.

Although FIGURE 1 illustrates one example of an interconnection between a flammable liquid supply 102 and an engine 104 through some type of engine component 106, various changes may be made to FIGURE 1. For example, various components and functions in FIGURE 1 may be combined, further subdivided, replicated, rearranged, or omitted according to particular needs. Also, one or more additional components and functions may be included if needed or desired.

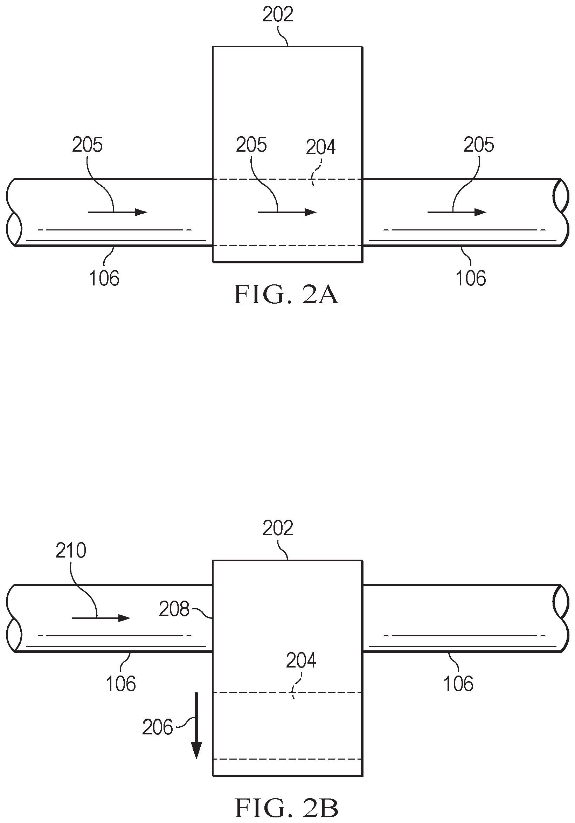

In order to solve this problem a load sensing inertial valve 202 such as that illustrated in FIGURES 2A and 2B may be inserted at various locations with respect to the engine component 106. For example, FIGURE 1 illustrates the engine component 106 that comprises a feed line between the flammable liquids 102 and the engine 104. If a break or breach occurs at a location indicated generally by arrow at 108 within the engine component 106 feed line flammable liquid may leak and pool from the break location. While this has been described with respect to a flammable liquid that can pool, other flammable fuels such as hydrogen, methane, propane, etc. may also be protected by the described system even though as a gas they would not pool.

The inertial valve 202 is associated with the engine component 106 and moves between an open position (FIGURE 2A) and a closed position (FIGURE 2B). Within the open position as illustrated in FIGURE 2A, the inertial valve 202 is aligned such that an opening 204 enables or provides the passage of the flammable liquid through the inertial valve to continue on through the engine component 106 as shown generally at 205. When G forces are applied to the inertial valve 202 in a direction generally indicated by arrow 206, the inertial valve 202 will move from the open position shown in FIGURE 2A to the closed position shown in FIGURE 2B. Movement of the flammable liquid then only occurs up to a surface 208 of the inertial valve 202 that blocks or limits the flow 210 through the engine component 106. In the closed position of the inertial valve 202 blockage of flow of the flammable liquid prevents further leakage and or pooling of the flammable liquid within the damaged engine component 106.

The movement of the inertial valve 202 from the open position to the closed position responsive to the G forces can be done mechanically or electro mechanically as will be more fully discussed in the following embodiments. Additionally, while the above description has been made with respect to an aircraft engine 104, it will be appreciated that the inertial valve 202 has a wide range of applications spanning from fuel and oil valves on aircraft engines to automotive applications in the event of a high-G event such as a car crash.

Although FIGURES 2A and 2B illustrate one example of a load sensing inertial valve 202, various changes may be made to FIGURES 2A and 2B. For example, various components and functions in FIGURES 2A and 2B may be combined, further subdivided, replicated, rearranged, or omitted according to particular needs. Also, one or more additional components and functions may be included if needed or desired.

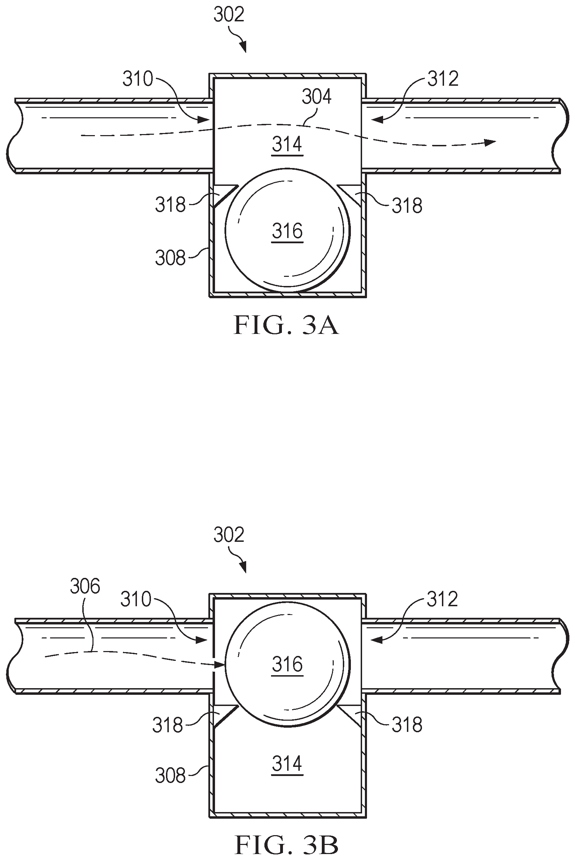

A plurality of different embodiments are described herein below with respect to FIGURES 3-11. In each case, the inertial valve will automatically close responsive to some type of high G event. This prevents the pooling and leakage of flammable liquids to prevent their ignition when they reach high temperatures or sparks.

Referring now to FIGURES 3A and 3B, there is illustrated an example inertial valve 302. FIGURE 3A illustrates the inertial valve 302 in the open position while FIGURE 3B illustrates the inertial valve in the closed position. When the inertial valve 302 is in the open position, flammable liquids may flow therethrough as shown generally at 304. When the inertial valve 302 is in the closed position, flammable liquids flow ceases after entering the valve 302 as shown generally at 306.

In the example of FIGURES 3A and 3B, the inertial valve 302 includes an exterior housing 308 having an inlet port 310 into which a flammable liquid flows into the inertial valve and an outlet port 312 from which the flammable liquid flows out of the inertial valve. The exterior housing 308 further defines an interior chamber 314 through which the flammable liquid flows from the inlet port 310 to the outlet port 312. A ball 316 is located within the interior chamber 314 and is used for blocking the flammable liquid flow between the inlet port 310 and the outlet port 312 in the closed position as illustrated in FIGURE 3B. In the open position, the ball 316 is held in the lower portion of the chamber 314 to enable the free flow of the flammable liquid between the inlet port 310 and the outlet port 312. The ball 316 is held in the lower portion of the chamber 314 by a pair of flexible nubs 318 that extend into the interior chamber 314 from the inner wall of the housing 308. High inertial forces will push the ball 316 from the position illustrated generally in FIGURE 3A past the flexible nubs 318 to the position at the upper portion of the interior chamber 314 as shown in FIGURE 3B. The ball 316 in this position will block the flow of flammable liquid between the inlet port 310 and the outlet port 312.

Although FIGURES 3A and 3B illustrate one example of an inertial valve 302, various changes may be made to FIGURES 3A and 3B. For example, various components and functions in FIGURES 3A and 3B may be combined, further subdivided, replicated, rearranged, or omitted according to particular needs. Also, one or more additional components and functions may be included if needed or desired.

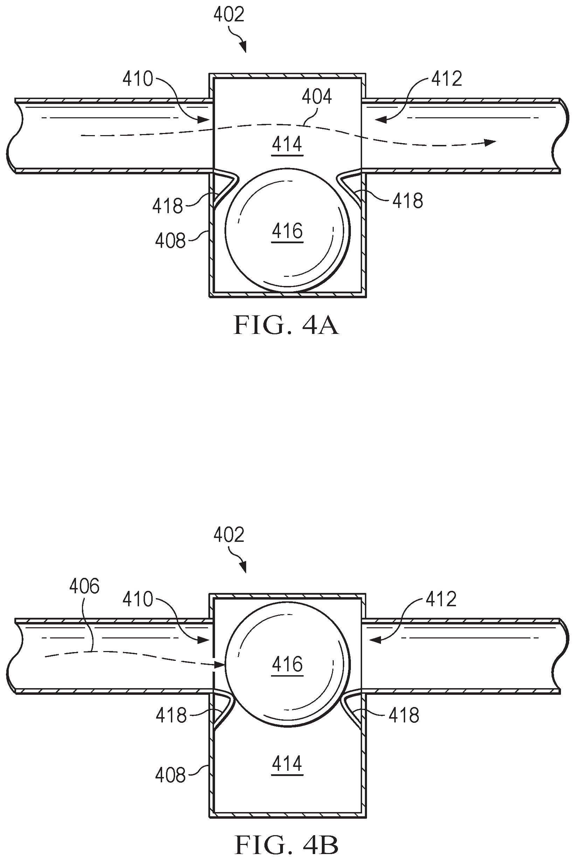

Referring now to FIGURES 4A and 4B, there is illustrated another example of an inertial valve 402. FIGURE 4A illustrates the inertial valve 402 in the open position while FIGURE 4B illustrates the inertial valve in the closed position. When the inertial valve 402 is in the open position, flammable liquids may flow therethrough as shown generally at 404. When the inertial valve 402 is in the closed position, flammable liquids flow ceases after entering the valve 402 as shown generally at 406.

In the example of FIGURES 4A and 4B, the inertial valve 402 includes an exterior housing 408 having an inlet port 410 into which a flammable liquid flows into the inertial valve and an outlet port 412 from which the flammable liquid flows out of the inertial valve. The exterior housing 408 further defines an interior chamber 414 through which the flammable liquid flows from the inlet port 410 to the outlet port 412. A ball 416 is located within the interior chamber 414 and is used for blocking the flammable liquid flow between the inlet port 410 and the outlet port 412 in the closed position as illustrated in FIGURE 4B. In the open position, the ball 416 is held in the lower portion of the chamber 414 to enable the free flow of the flammable liquid between the inlet port 410 and the outlet port 412. The ball 416 is held in the lower portion of the chamber 414 by a pair of springs 418 that extend into the interior chamber 414 from the inner wall of the housing 408. High inertial forces will push the ball 416 from the position illustrated generally in FIGURE 4A past the springs 418 to the position at the upper portion of the interior chamber 414 as shown in FIGURE 4B. The ball 416 in this position will block the flow of flammable liquid between the inlet port 410 and the outlet port 412.

Although FIGURES 4A and 4B illustrate one example of an inertial valve 402, various changes may be made to FIGURES 4A and 4B. For example, various components and functions in FIGURES 4A and 4B may be combined, further subdivided, replicated, rearranged, or omitted according to particular needs. Also, one or more additional components and functions may be included if needed or desired.

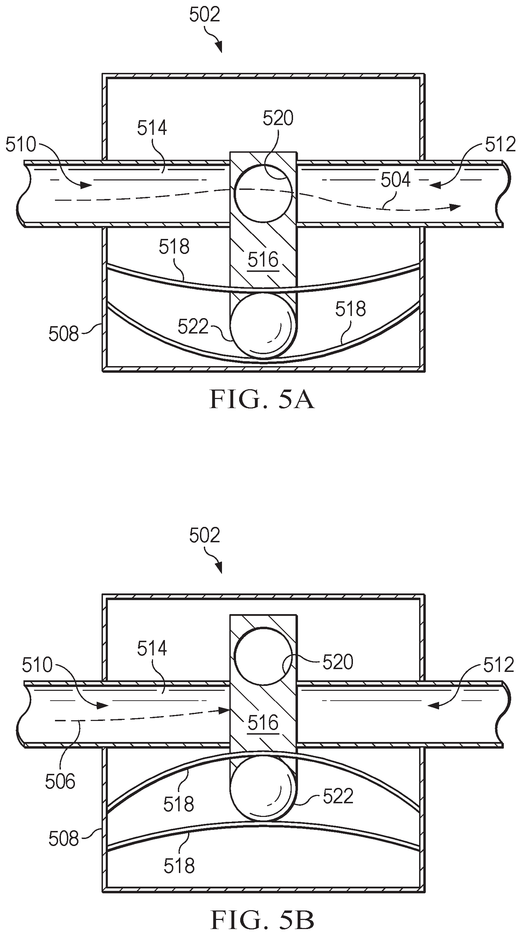

Referring now to FIGURES 5A and 5B, there is illustrated another example of an inertial valve 502. FIGURE 5A illustrates the inertial valve 502 in the open position while FIGURE 5B illustrates the inertial valve in the closed position. When the inertial valve 502 is in the open position, flammable liquids may flow therethrough as shown generally at 504. When the inertial valve 502 is in the closed position, flammable liquids flow ceases after entering the valve 502 as shown generally at 506.

In the example of FIGURES 5A and 5B, the inertial valve 502 includes an exterior housing 508 having an inlet port 510 into which a flammable liquid flows into the inertial valve and an outlet port 512 from which the flammable liquid flows out of the inertial valve. The exterior housing 508 further defines an interior passage 514 through which the flammable liquid flows from the inlet port 510 to the outlet port 512. A valve 516 is located with the interior passage 514 and includes an opening 520 that enables flammable liquid to flow past the valve in the open position (FIGURE 5A) when the opening aligns with the inlet port 510 and the outlet port 512. When in the closed position (FIGURE 5B) the valve 516 does not have the opening 520 aligned with the inlet port 510 and the outlet port 512 and blocks the flammable liquid flow between the inlet port and the outlet port.

The valve 516 is held in a lower portion by a pair of springs 518 that flex between the open position where the valve 516 allows the flow of flammable liquid and the closed position where the valve is held in the closed position to prevent the flow of flammable liquid. The springs 518 are connected to the valve 516 via ball 522 that connects to the base of the valve 516 and rests between the springs 518 to move between the open and closed positions. High inertial forces will push the ball 522 and the connected valve 516 from the position illustrated generally in FIGURE 5A to the position shown in FIGURE 5B.

Although FIGURES 5A and 5B illustrate one example of an inertial valve 502, various changes may be made to FIGURES 5A and 5B. For example, various components and functions in FIGURES 5A and 5B may be combined, further subdivided, replicated, rearranged, or omitted according to particular needs. Also, one or more additional components and functions may be included if needed or desired.

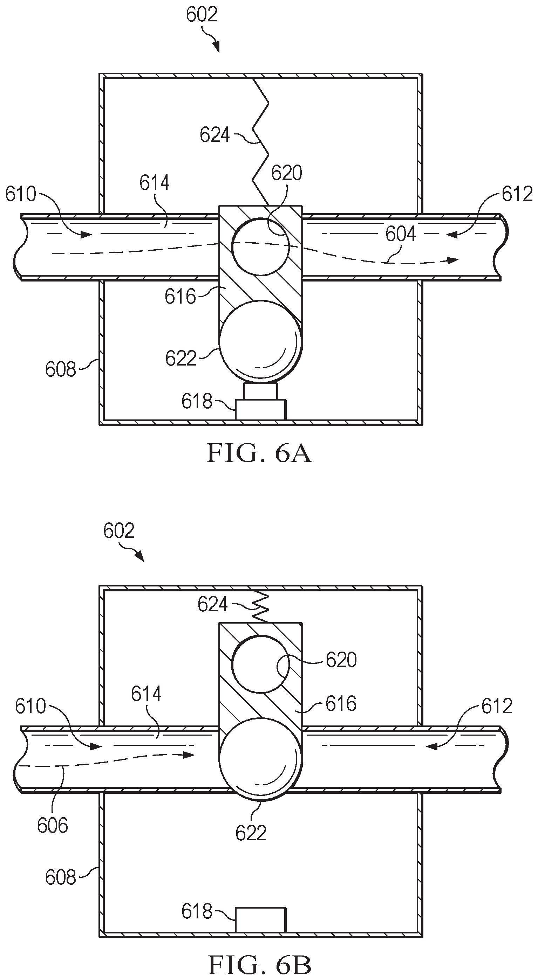

Referring now to FIGURES 6A and 6B, there is illustrated another example of an inertial valve 602. FIGURE 6A illustrates the inertial valve 602 in the open position while

FIGURE 6B illustrates the inertial valve in the closed position. When the inertial valve 602 is in the open position, flammable liquids may flow therethrough as shown generally at 604. When the inertial valve 602 is in the closed position, flammable liquids flow ceases after entering the valve 602 as shown generally at 606.

In the example of FIGURES 6A and 6B, the inertial valve 602 includes an exterior housing 608 having an inlet port 610 into which a flammable liquid flows into the inertial valve and an outlet port 612 from which the flammable liquid flows out of the inertial valve. The exterior housing 608 further defines an interior passage 614 through which the flammable liquid flows from the inlet port 610 to the outlet port 612. A valve 616 is located with the interior passage 614 and includes an opening 620 that enables flammable liquid to flow past the valve in the open position (FIGURE 6A) when the opening aligns with the inlet port 610 and the outlet port 612. When in the closed position (FIGURE 6B) the valve 616 does not have the opening 620 aligned with the inlet port 610 and the outlet port 612 and blocks the flammable liquid flow between the inlet port and the outlet port.

The valve 616 is held in the lower portion by a fuse/shear puck 618 that holds the valve in the open position. The fuse/shear puck 618 connects the valve 616 to the base of the housing 608 to hold the valve in place. A spring 624 connects the top of the valve 616 to bias the valve to the closed position when the fuse/shear puck 618 is broken. The fuse/shear puck 618 is connected to the valve 616 via a ball 622 or other connection structure that connects to the base of the valve 616 and secures the valve to the base of the housing 608. High inertial forces will break the fuse/shear puck 618 and the spring 624 will cause the valve 616 to move from the position illustrated generally in FIGURE 6A to the position shown in FIGURE 6B.

Although FIGURES 6A and 6B illustrate one example of an inertial valve 602, various changes may be made to FIGURES 6A and 6B. For example, various components and functions in FIGURES 6A and 6B may be combined, further subdivided, replicated, rearranged, or omitted according to particular needs. Also, one or more additional components and functions may be included if needed or desired.

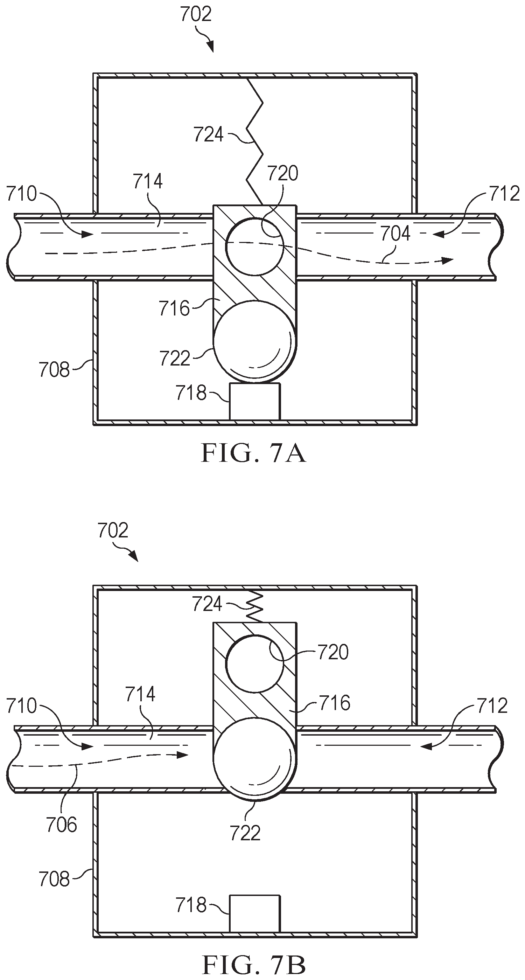

Referring now to FIGURES 7A and 7B, there is illustrated another example of an inertial valve 702. FIGURE 7A illustrates the inertial valve 702 in the open position while

FIGURE 7B illustrates the inertial valve in the closed position. When the inertial valve 702 is in the open position, flammable liquids or gases may flow therethrough as shown generally at 704. When the inertial valve 702 is in the closed position, flammable liquids flow ceases after entering the valve 702 as shown generally at 706.

In the example of FIGURES 7A and 7B, the inertial valve 702 includes an exterior housing 708 having an inlet port 710 into which a flammable liquid flows into the inertial valve and an outlet port 712 from which the flammable liquid flows out of the inertial valve. The exterior housing 708 further defines an interior passage 714 through which the flammable liquid flows from the inlet port 710 to the outlet port 712. A valve 716 is located with the interior passage 714 and includes an opening 720 that enables flammable liquid to flow past the valve in the open position (FIGURE 7A) when the opening aligns with the inlet port 710 and the outlet port 712. When in the closed position (FIGURE 7B) the valve 716 does not have the opening 720 aligned with the inlet port 710 and the outlet port 712 and blocks the flammable liquid flow between the inlet port and the outlet port.

The valve 716 is held in place by a magnetic plate 718 connected to the base of the valve housing 708 and ferrous ball 722 that holds the valve in the open position when the magnetic plate and ferrous ball are connected. A spring 724 connects the top of the valve 716 to bias the valve to the closed position when the connection between the magnetic plate 718 and the ferrous ball 722 is broken. High inertial forces will break the connection between the magnetic plate 718 and the ferrous ball 722 and the spring 724 will cause the valve 716 to move from the open position illustrated generally in FIGURE 7A to the closed position shown in FIGURE 7B.

Although FIGURES 7A and 7B illustrate one example of an inertial valve 702, various changes may be made to FIGURES 7A and 7B. For example, various components and functions in FIGURES 7A and 7B may be combined, further subdivided, replicated, rearranged, or omitted according to particular needs. Also, one or more additional components and functions may be included if needed or desired.

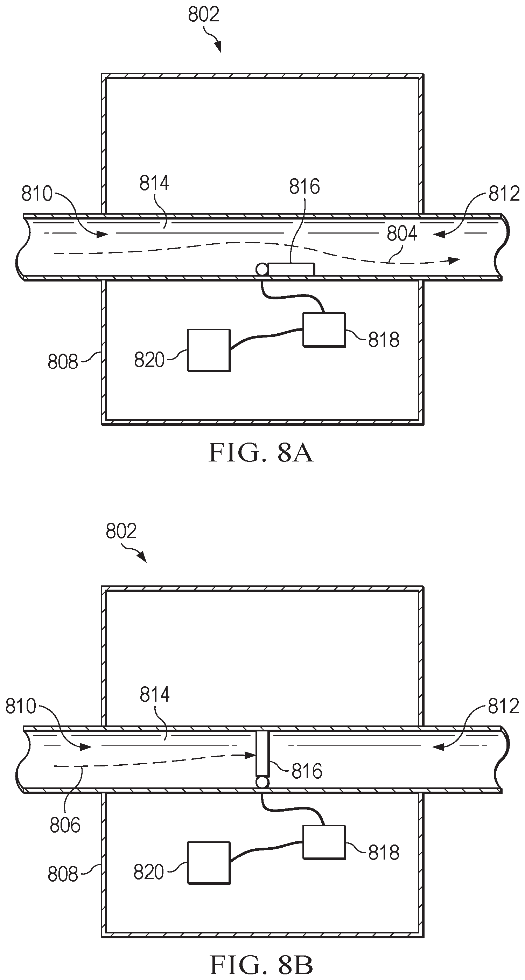

Referring now to FIGURES 8A and 8B, there is illustrated another example of an inertial valve 802. FIGURE 8A illustrates the inertial valve 802 in the open position while

FIGURE 8B illustrates the inertial valve in the closed position. When the inertial valve 802 is in the open position, flammable liquids may flow therethrough as shown generally at 804. When the inertial valve 802 is in the closed position, flammable liquids flow ceases after entering the valve 802 as shown generally at 806.

In the example of FIGURES 8A and 8B, the inertial valve 802 includes an exterior housing 808 having an inlet port 810 into which a flammable liquid flows into the inertial valve and an outlet port 812 from which the flammable liquid flows out of the inertial valve. The exterior housing 808 further defines an interior passage 814 through which the flammable liquid flows from the inlet port 810 to the outlet port 812. A valve 816 is located within the interior passage 814 that enables flammable liquid to flow past the valve in the open position (FIGURE 8A) and blocks the flammable liquid flow between the inlet port 810 and the outlet port 812 when in the closed position (FIGURE 8B).

The valve 816 moves between the open position and the closed position responsive to control signals from the FADEC 818 or some other engine controller. The FADEC 818 generates the control signals to open and close the valve 816 responsive to signals received from the accelerometer 820. High inertial forces will cause the accelerometer to send detection signals to the FADEC which will generate control signals to close the valve 816 responsive thereto.

Although FIGURES 8A and 8B illustrate one example of an inertial valve 802, various changes may be made to FIGURES 8A and 8B. For example, various components and functions in FIGURES 8A and 8B may be combined, further subdivided, replicated, rearranged, or omitted according to particular needs. Also, one or more additional components and functions may be included if needed or desired.

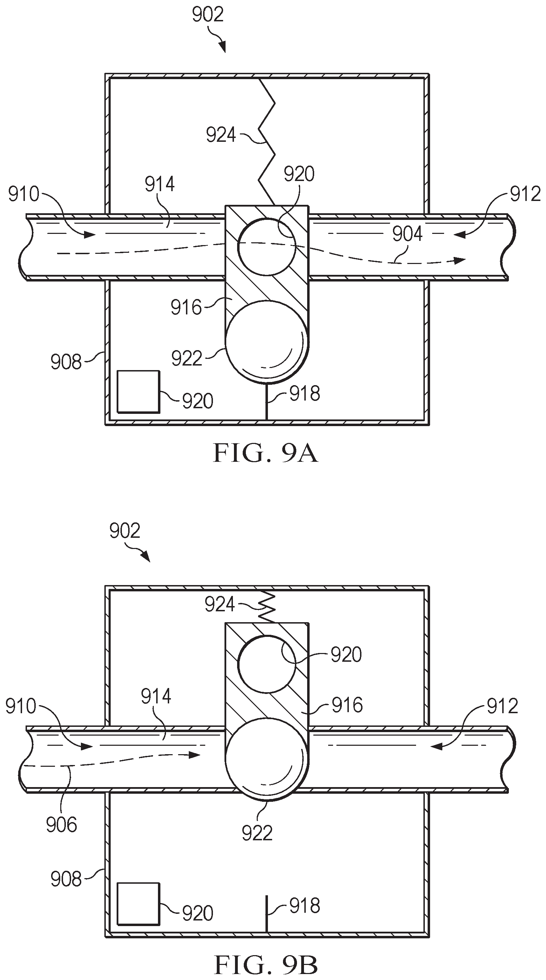

Referring now to FIGURES 9A and 9B, there is illustrated another example of an inertial valve 902. FIGURE 9A illustrates the inertial valve 902 in the open position while

FIGURE 9B illustrates the inertial valve in the closed position. When the inertial valve 902 is in the open position, flammable liquids may flow therethrough as shown generally at 904. When the inertial valve 902 is in the closed position, flammable liquids flow ceases after entering the valve 902 as shown generally at 906.

In the example of FIGURES 9A and 9B, the inertial valve 902 includes an exterior housing 908 having an inlet port 910 into which a flammable liquid flows into the inertial valve and an outlet port 912 from which the flammable liquid flows out of the inertial valve. The exterior housing 908 further defines an interior passage 914 through which the flammable liquid flows from the inlet port 910 to the outlet port 912. A valve 916 is located with the interior passage 914 and includes an opening 921 that enables flammable liquid to flow past the valve in the open position (FIGURE 9A) when the opening aligns with the inlet port 910 and the outlet port 912. When in the closed position (FIGURE 9B) the valve 916 does not have the opening 921 aligned with the inlet port 910 and the outlet port 912 and blocks the flammable liquid flow between the inlet port and the outlet port.

The valve 916 is held in place by a fuse/wire 918 connected to the base of the valve housing 908 and ball 922 that holds the valve in the open position. A spring 924 connects the top of the valve 916 to bias the valve to the closed position when the fuse/wire 918 is broken. An accelerometer 920 detects high inertial forces being applied to the engine component and generates detection signals responsive thereto. High inertial forces will cause the accelerometer 920 to generate a signal to break the fuse/wire 918 to allow the valve 916 to move to the closed position.

Although FIGURES 9A and 9B illustrate one example of an inertial valve 902, various changes may be made to FIGURES 9A and 9B. For example, various components and functions in FIGURES 9A and 9B may be combined, further subdivided, replicated, rearranged, or omitted according to particular needs. Also, one or more additional components and functions may be included if needed or desired.

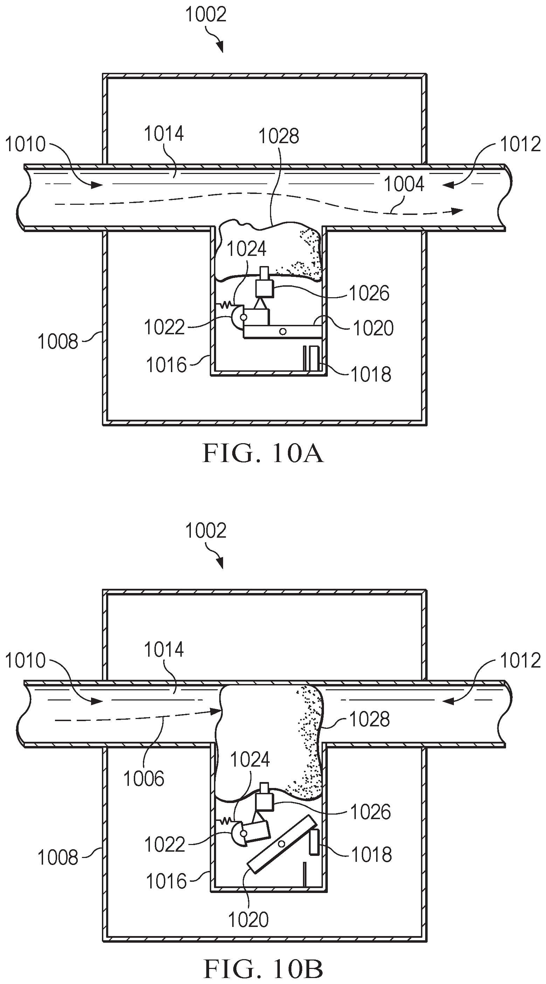

Referring now to FIGURES 10A and 10B, there is illustrated another example of an inertial valve 1002. FIGURE 10A illustrates the inertial valve 1002 in the open position while

FIGURE 10B illustrates the inertial valve in the closed position. When the inertial valve 1002 is in the open position, flammable liquids may flow therethrough as shown generally at 1004. When the inertial valve 1002 is in the closed position, flammable liquids flow ceases after entering the valve 1002 as shown generally at 1006.

In the example of FIGURES 10A and 10B, the inertial valve 1002 includes an exterior housing 1008 having an inlet port 1010 into which a flammable liquid flows into the inertial valve and an outlet port 1012 from which the flammable liquid flows out of the inertial valve. The exterior housing 1008 further defines an interior passage 1014 through which the flammable liquid flows from the inlet port 1010 to the outlet port 1012.

The inertial valve 1002 comprises a weight 1018 (the weight may also comprise a magnet 718 with a base 722 similar to that disclosed in Fig. 7), a trigger bar 1020 and opposing tooth wheel 1022, a spring 1024, a gas canister 1026 and an expansion sleeve 1028. In the open position illustrated in FIGURE 10A, the expansion sleeve 1028 is deflated enabling flammable liquid to flow down the interior passage 1014. The trigger bar 1020 prevents the opposing tooth wheel 1022 from triggering a gas canister 1026 in the open position.

Responsive to a high G or high inertia event, the weight 1018 accelerates upward hitting a first end of the of the trigger bar 1020. This causes the trigger bar 1020 to pivot about a pivot point to move a second end of the trigger bar out from under the opposing tooth wheel 1022. Once the trigger bar 1020 is moved out from under the opposing tooth wheel 1022, the spring 1024, which is connected to the opposing tooth wheel and an inner wall of the housing 1008, retracts causing the opposing tooth wheel 1022 to rotate and actuate the gas canister 1026. The punctured gas canister 1026 causes inflation of the expansion sleeve 1028. The inflated expansion sleeve 1028 blocks the interior passage 1014 which blocks the flow of flammable liquid through the interior passage. The expansion sleeve 1028 may be configured to remain inflated for a definite or indefinite period of time.

Although FIGURES 10A and 10B illustrate one example of an inertial valve 1002, various changes may be made to FIGURES 10A and 10B. For example, various components and functions in FIGURES 10A and 10B may be combined, further subdivided, replicated, rearranged, or omitted according to particular needs. Also, one or more additional components and functions may be included if needed or desired.

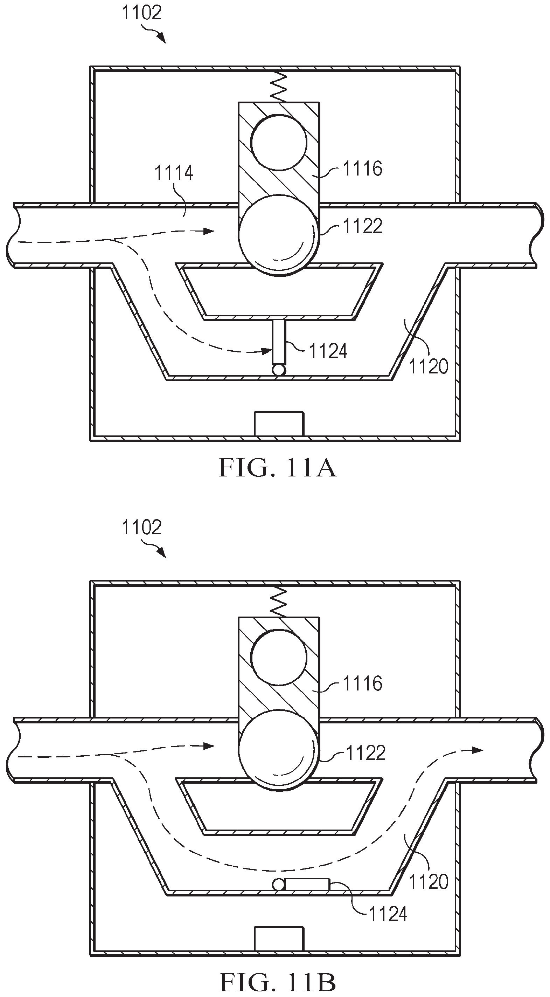

Referring now to FIGURES 11A and 11B, there is illustrated an inertial valve 1102 similar to that previously described with respect to FIGURES 7A and 7B. It will be appreciated that the implementations discussed with respect to 11A and 11B may be implemented with any of the valve examples discussed herein. In this example, a bypass channel 1120 is provided off of the interior channel 1122. A bypass valve 1124 is included within the bypass channel 1120. Thus, when the valve 1116 within the inertial valve 1102 is in the closed position, the bypass valve 1124 may also be closed to prevent any bypass of flammable liquid through the bypass channel 1120. However, certain situations may arise wherein when the valve 1116 is closed it may be determined that flammable liquid is still needed by the engine during critical time periods. This could be in a cases such as when the aircraft was in flight and fuel was still needed to power the engine, takeoff, landing and when the aircraft was located over a large body of water or other area that is not hospitable to landing. If within glide distance to an airport or other suitable landing area, the valve 1124 would close. In this case, the inertial valve 1102 closed condition may be overridden by opening the bypass valve 1124 enabling the flammable liquid to flow through the bypass channel 1120. Thus, in the example mentioned above, fuel would be allowed to continue to flow to the engine through the bypass channel 1120 in an emergency situation where in the fuel off state was overridden by either manual or automatic control.

Although FIGURES 11A and 11B illustrate one example of an inertial valve 1102, various changes may be made to FIGURES 11A and 11B. For example, various components and functions in FIGURES 11A and 11B may be combined, further subdivided, replicated, rearranged, or omitted according to particular needs. Also, one or more additional components and functions may be included if needed or desired.

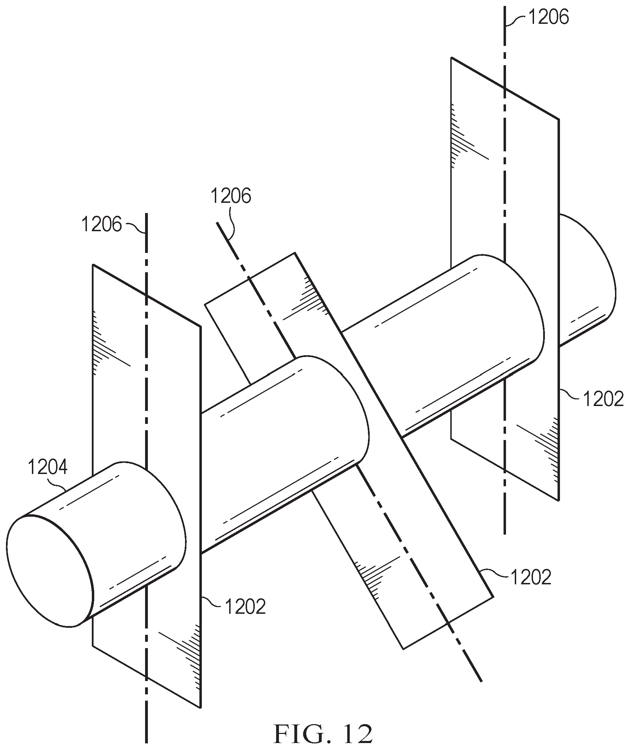

Referring now to FIGURE. 12, there is illustrated a manner for orienting inertial valves 1202 in various directions to account for differing G forces. In this example, the engine component 1204 comprises a line through which a flammable liquid would flow. It will be appreciated of course that any potentially damage engine component could have inertial valves 1202 incorporated therein. In this case, each of the inertial valves 1202 are oriented with the engine component 1204 and long a different axis 1206. Each of the axis 1206 are along a direction in which a high inertial force may act upon the engine component 1204. A force applied along the axis 1206 of any of the inertial valves 1202 will activate that particular valve. Thus, a G force in one direction may activate one inertial valve 1202 having an axis 1206 along or near the direction of the G force but would not activate inertial valves 1202 having an axis 1206 that were not substantially along the direction of the G force.

Although FIGURE 12 illustrates one example of a manner for orienting inertial valves 1202 in various directions to account for differing G forces, various changes may be made to FIGURE 12. For example, various components and functions in FIGURE 12 may be combined, further subdivided, replicated, rearranged, or omitted according to particular needs. Also, one or more additional components and functions may be included if needed or desired.

The use of inertial valves in the manner described herein will assist in preventing uncontained exothermic events within an engine by blocking the pooling of flammable fluids and preventing them from reaching high temperature areas. The load activated system will only be triggered during extremely high G event such as a blade out in an aircraft or a crash in an automobile.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. An inertial valve (202; 302; 402; 502; 602; 702; 802; 902; 1002; 1102; 1202), comprising:
a housing (208) configured to connect with an engine component (106), the housing defining an inlet (310) for receiving a flammable liquid and an outlet (312) for outputting the flammable liquid;
wherein the inertial valve (202) is configured to provide a first mode of operation that provides a flow (205) of flammable liquid from the inlet (310) to the outlet (312);
wherein the inertial valve (202) is configured to provide a second mode of operation that limits the flow (210) of the flammable liquid received at the inlet (310) to the outlet (312); and
wherein the inertial valve (202) is configured to move from the first mode of operation to the second mode of operation responsive to a g force on the inertial valve (202) exceeding a predetermined level.

2. The inertial valve (302) of Claim 1 further comprising:
a ball valve (316);
a plurality of flexible nubs (318) to maintain the ball valve (316) in a first position in the first mode of operation to provide the flow (304) of the flammable liquid from the inlet (310) to the outlet (312); and
wherein responsive to the g force exceeding the predetermined level the ball valve (316) is configured to push past the plurality of flexible nubs (318) to a second position in the second mode of operation to limit the flow (306) of the flammable liquid from the inlet (310) to the outlet (312).

3. The inertial valve (402) of Claim 1 further comprising:
a ball valve (416);
a plurality of springs (418) to maintain the ball valve (416) in a first position in the first mode of operation to provide the flow (404) of the flammable liquid from the inlet (410) to the outlet (412); and
wherein responsive to the g force exceeding the predetermined level the ball valve (416) is configured to push past the plurality of springs (418) to a second position in the second mode of operation to limit the flow (406) of the flammable liquid from the inlet (410) to the outlet (412).

4. The inertial valve (502) of Claim 1 further comprising:
a member (516) defining an opening (520) therein on a first portion of the member (516) to provide the flow (504) of the flammable liquid from the inlet (510) through the opening (520) to the outlet (512) when the member (516) is in a first position;
a ball (522) connecting to a second portion of the member (516), wherein the ball (522) is configured to limit the flow (506) of the flammable liquid from the inlet (510) to the outlet (512) when the member (516) moves to a second position in the second mode of operation responsive to the g force exceeding the predetermined level;
a first spring (518) located on a top side of the ball (522);
a second spring (518) located on a bottom side of the ball (522); and
wherein the first spring (518) and the second spring (518) bias the member (516) to the first position and move the member (516) to the second position responsive to g force exceeding the predetermined level.

5. The inertial valve (602; 702; 902) of Claim 1 further comprising:
a member (616; 716; 916) defining an opening (620; 720; 920) therein on a first portion of the member (616; 716; 916) to provide the flow (604; 704; 904) of the flammable liquid from the inlet (610; 710; 910) through the opening (620; 720; 920) to the outlet (612; 712; 912) when the member (616; 716; 916) is in a first position;
a ball (622; 722; 922) connecting to a second portion of the member (616; 716; 916), wherein the ball (622; 722; 922) is configured to limit the flow (606; 706; 906) of the flammable liquid from the inlet (610; 710; 910) to the outlet (612; 712; 912) when the member (616; 716; 916) moves to a second position in the second mode of operation responsive to the g force exceeding the predetermined level;
a spring (624; 724; 924) connected to a first end of the member (616; 716; 916) for biasing the member (616; 716; 916) to the second position;
a securing mechanism (618; 718; 918) configure to secure the member (616; 716; 916) into the first position when the inertial valve (602; 702; 902) is in the first mode of operation; and
wherein the securing mechanism (618; 718; 918) is configured to release the member (616; 716; 916) to move to the second position in the second mode of operation responsive to the g force exceeding the predetermined level.

6. The inertial valve (802) of Claim 1 further comprising:
an accelerometer (820) configured to detect the g force exceeding the predetermined level and generating a sense signal responsive thereto;
a controller (818) configured to generate control signals responsive to the sense signal from the accelerometer (820); and
an electromechanical valve (816) located in a passageway (814) between the inlet (810) and the outlet (812), wherein the electromechanical valve (816) is located in a first position to provide the flow (804) of the flammable liquid through the passageway (814) in the first mode of operation and located in a second position to limit the flow (806) of the flammable liquid through the passageway (814) in the second mode of operation responsive to the control signal indicating the g force has exceeded the predetermined level.

7. The inertial valve (1002) of Claim 1 further comprising:
an expansion sleeve (1028) located between the inlet (1010) and the outlet (1012), wherein the expansion sleeve (1028) is deflated in the first mode of operation to provide the flow (1004) of the flammable liquid from the inlet (1010) to the outlet (1012) and the expansion sleeve (1028) is inflated in the second mode of operation to limit the flow (1006) of the flammable liquid from the inlet (1010) to the outlet (1012);
an inflator (1026) configured to inflate the expansion sleeve (1028) responsive to a trigger input; and
an actuator (1018, 1020, 1022, 1024) configured to detect the g force exceeding the predetermined level and generate the trigger input responsive thereto.

8. The inertial valve (1102) of any preceding Claim further comprising:
a bypass passage (1120) interconnecting the inlet (310) to the outlet (312);
a bypass valve (1124) located within the bypass passage (1120) configured to have a first position to provide the flow of the flammable liquid therethrough and a second position to limit the flow of the flammable liquid therethrough; and
wherein the bypass valve (1124) is placed in the first position to provide the flow of the flammable liquid through the bypass passage (1120) while the inertial valve (1102) is in the second mode of operation responsive to an external control signal.

9. A system for controlling leakage of flammable liquids comprising:
an engine component (106) having a flammable liquid pass therethrough;
at least one inertial valve (202...1202) connected to the engine component (106) to allow the flammable liquid to pass therethrough, the at least one inertial valve of any preceding claim.

10. The system of Claim 9, wherein the at least one inertial valve (1202) further comprises a plurality of inertial valves (1202), each of the plurality of inertial valves (1202) having an orientation axis (1206) associated therewith, wherein an inertial value (1202) is actuated to the second mode of operation responsive to the g force exceeding the predetermined level in a direction substantially a same as the orientation axis (1026) of the inertial valve (1202).

11. A method for controlling a flow of flammable liquid, comprising:
connecting an inertial valve (202...1202) with an engine component (106), the inertial valve (202...1202) defining an inlet (310) for receiving a flammable liquid and an outlet (312) for outputting the flammable liquid;
providing a first mode of operation for the inertial valve (202...1202) to provide the flow of the flammable liquid from the inlet (310) to the outlet (312);
wherein the inertial valve (202...1202) is configured to providing a second mode of operation for the inertial valve (202...1202) to limit the flow of the flammable liquid received at the inlet (310) to the outlet (312); and
moving the inertial valve (202...1202) from the first mode of operation to the second mode of operation responsive to a g force on the inertial valve (202...1202) exceeding a predetermined level.

12. The method of Claim 11 further comprising:
locating a plurality of inertial valves (1202) on the engine component (106), each of the plurality of inertial valves (1202) having an orientation axis (1206) associated therewith; and
actuating the inertial valve (1202) of the plurality of inertial valves (1202) to the second mode of operation responsive to the g force exceeding the predetermined level in a direction substantially a same as the orientation axis (1206) of the inertial valve (1202).

13. The method of Claim 11 or 12 further comprising:
interconnecting a bypass passage (1120) between the inlet (310) to the outlet (312);
locating a bypass valve (1124) within the bypass passage (1120) configured to have a first position to provide the flow of the flammable liquid there through and a second position to limit the flow of the flammable liquid therethrough; and
placing the bypass valve (1124) in the first position to provide the flow of the flammable liquid through the bypass passage (1120) while the inertial valve (202...1202) is in the second mode of operation responsive to an external control signal.
